(19) Europäisches Patentamt
European Patent Office
Office européen des brevets

(11) **EP 1 749 450 B1**

(12) **EUROPEAN PATENT SPECIFICATION**

(45) Date of publication and mention of the grant of the patent:
**28.05.2014 Bulletin 2014/22**

(51) Int Cl.:
*A23L 1/16* *(2006.01)*          *A23L 1/20* *(2006.01)*
*A23L 1/0522* *(2006.01)*

(21) Application number: **05107249.4**

(22) Date of filing: **05.08.2005**

(54) **Gluten-free pasta and dough, use of the dough and process for preparing same**

Glutenfreie Teig und Teigwaren, Verwendung dieses Teiges und Verfahren zu ihrer Herstellung

Pâtes alimentaires et pâte sans gluten, utilisation de cette pâte et procédé de préparation.

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**07.02.2007 Bulletin 2007/06**

(73) Proprietor: **Heinz Italia S.p.A.**
**04100 Latina (IT)**

(72) Inventors:
• **Budelli, Andrea**
 **21013 GALLARATE (VARESE) (IT)**

• **Fontanesi, Massimo**
 **42047 MONTECCHIO EMILIA (REGGIO EMILIA) (IT)**

(74) Representative: **Mancini, Vincenzo et al**
**Giambrocono & C. S.p.A.**
**Via Rosolino Pilo 19/B**
**20129 Milano (IT)**

(56) References cited:
**EP-A- 0 449 697      EP-A- 0 872 188**
**EP-A- 0 997 078      FR-A- 2 815 518**
**US-A- 3 836 680      US-A- 4 517 215**
**US-A- 5 989 620**

EP 1 749 450 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a gluten-free pasta and dough, use of the dough and process for preparing them; in particular, the pasta and dough of the invention comprise naturally gluten-free raw source of starch, gluten-free flour, gluten-free protein source and a gluten-free emulsifier. The invention further discloses the use of the dough for the manufacture of the pasta of the invention as well as a process for preparing both the dough and the pasta.

Celiac disease is an autoimmune intolerance to gluten, resulting in degradation of the intestinal villi and decrease in macro- and micro-nutrient absorption. The disease presents a variety of symptoms such as diarrhea, bloated abdomen, weight loss, skin rashes, spontaneous abortions and a number of other pathologic phenomena.

It is also known that there is a clear link between celiac disease and diabetes both of type I and II. In type I, there is probably a concomitant cause of genetic type, whereas the probable cause for the onset of type II is the continued macronutrient malabsorption from which untreated celiac people suffer.

The speed at which carbohydrates are absorbed is expressed by the glycemic index: the higher the index is, the faster the carbohydrate absorption results and, consequently, the insulin absorption. In the long run, this affects the insulin production process, leading to diabetes onset. Literature data about superfine pasta give a glycemic index value of approximatively 60 with reference to glucose for which the value is 100.

The degree of intolerance to gluten depends on each single individual yet, in any case, the only treatment for people affected by the coeliac disease is adhering to a gluten-free diet.

Gluten is a protein contained in many cereals and is formed of two sub-units: gliadin and glutenin.

The amount of proteins contained in bread and pasta depends on the type of flour: it may range from 12% by weight (weak flours for baked products and fresh pasta) to 19% by weight (strong flours for pasta and bread). Most of these proteins are gluten.

Many foodstuffs forming the basis of western diet are based on wheat flour or other gluten-containing cereals, since gluten provides the fundamental rheological properties required for bread baking and pasta-making.

The protein intake provided by wheat flour comes mainly from gluten, which is a protein of low biological value, though essential to provide appropriate rheological properties. Therefore pasta is not a good protein source.

However, the gluten intake provided by standard pasta far exceeds the maximum amount of gluten a celiac person can tolerate.

Most gluten-free pastas currently on the marketplace are made of a single ingredient (e.g.: rice pasta, maize pasta etc.) and are therefore definitely unbalanced from a nutritional point of view. Further, literature data show that starch-based gluten free pastas (e.g. rice pasta, maize pasta) have a much higher glycemic index than wheat pasta. This is due to the absence of gluten, which forms a sort of reticulum incorporating carbohydrates and protecting them from the attack of body enzymes (amylase).

Other gluten-free pastas commercially available such as those ones made of just soy and peas have a glycemic index considerably lower than that one of wheat flour pasta although their rheological and organoleptic features are quite different from those of traditional pasta.

As a consequence, gluten-free pastas available on the market are easily subject to overcooking which, besides making them evidently distasteful, brings to sticking.

Further, the raw materials from which proteins are extracted contain commonly genetically modified varieties which increase, indeed, the risk of getting genetically modified organisms in gluten-free pasta.

Still further, the current production of gluten-free pastas shows several manufacturing characteristics which can lead to losses of the hypoglycemic effect.

For instance, the powder ingredients (starch, gluten-free flours, proteins, emulsifying agents) are mixed mechanically: this representing a potential damage to starch and proteins and possibly leading to problems in the gelatinized starch reticulum formation - which results in an unsuitable organoleptic quality of the final pasta and, above all, in a higher glycemic index.

FR 2815518 describes a process for preparing a gluten-free pasta comprising adding a pre-mixture of 5-15% of gelatinized modified starch, 10-40% of natural starch and 10-40% of gluten-free flour to 20-40% water containing 0.2-2% of propylene glycol alginate and 0.2-2% of at least one emulsifier.

EP 0872188 discloses a method for preparing gluten-free pasta, based on corn and/or rice, comprising adding a monoglyceride to a partially gelatinized corn and/or rice flour and extruding the resulting mixture by means of a multi-stage controlled-temperature extruder-cooker.

US 3836680 describes a process for the production of a protein free starch-base alimentary pasta obtained substantially from a mixture of ungelatinized starch and gelatinized starch, comprising cooking and extruding such mixture.

US 5989620 discloses a process for preparing legume, gluten-free pasta products, such as pasta and dough, with improved textural, integrity and flavour characteristics, which comprises high temperature extrusion.

US 4517215 describes a process for the preparation of a vegetable pasta wherein a composition comprising a seed or tuberous vegetable in particulate form is mixed with sodium and/or potassium alginate, propylene glycol alginate, water and, possibly, starch, said composition comprising no wheat flours, the resulting composition being extruded into a pasta shape and dried, with the proviso that at least 10% by weight of starch must be present when a high protein vegetable or potato powder is used.

EP-A-0997078 describes a pasta made from wheat flour enriched with vegetable proteins and comprising at least one legume protein concentrate and/or isolate, the legume being selected from the group comprising soya, lupins, peas, beans and chick peas. A dough for the preparation of the pasta and the use of the legume protein concentrate and/or isolate in the preparation of the dough for the production of pasta are also disclosed.

EP-A-0449697 discloses a lupin flour comprising at least 90% of particles having dimensions lower than 100 $\mu$ and at least 60% of particles having dimensions lower than 30 $\mu$; a process for obtaining such lupin flour is also described together with the use of the lupin flour in foodstuff as a protein supplement or a texture agent.

These products are evidently either unsuitable in a coeliac dietetic regime because of the presence of cereals containing gluten or show high values of the glycemic index.

The technical problems which the present invention relate to, concern therefore providing a gluten-free pasta made of naturally gluten-free cereals and ingredients, deriving its protein quota from naturally gluten-free raw materials, as well, and showing a glycemic index considerably lower than that one of wheat flour pasta and yet rheological and organoleptic properties and features (such as, for instance, consistency after cooking) comparable with those ones of traditional pasta.

Further, the invention faces the problem of effectively preventing the onset of type II diabetes.

It has been now found that these problems, as well as further problems which will result evident by reading the present description, can be overcome by a pasta comprising the following dry powder ingredients a) 50% to 90% by weight of naturally gluten-free raw maize or maize and potato starch, wherein maize starch ranges from 60% to 80% by weight and potato starch ranges from 10% to 30% by weight; b) 2 to 60% by weight of a gluten-free flour selected from at least one of the group consisting of pea, bean, broad bean, soy, carob, lentil, peanut, lupin and/or a mixture thereof and/or c) 0.5 to 30% by weight of a gluten-free protein source selected from at least one of the group consisting of pea, bean, broad bean, soy, carob, lentil, peanut, lupin, a concentrate or an isolate thereof and/or a mixture thereof; d) 0.1 to 5% by weight of a gluten-free emulsifier; the sum of a) to d) being 100%.

Although the ingredients a)-d) comprised in the pasta of the invention are dry powders, they may show a certain moisture, basically deriving from their own nature, hygroscopicity and shelf-life, and however falling within the ranges prescribed by the rules and regulations of the dietary field.

The flour ranges preferably from 5% to 30%, more preferably from 5% to 15% by weight.

Most preferably, the flour derives from lupin; in particular, the lupin flour ranges from 5% to 10% by weight.

The protein source ranges preferably from 2% to 8% by weight; The protein source is preferably lupin, a concentrate or an isolate thereof and/or a mixture thereof.

"Protein concentrate" and "protein isolate" are herein intended to define substances constituted mainly by proteins extracted from seeds of the above mentioned plants by conventional preparation methods comprising the steps of extraction, purification and drying of the proteins.

Protein concentrates generally have a protein content of 50-80% by weight relative to the weight of the dry matter.

Protein isolates, however, may even reach a protein content of 90-95% by weight relative to the weight of the dry matter.

The emulsifier preferably ranges from 0.3 to 2% by weight and, in particular, is selected from at least one of the group consisting of soy lecithin, sunflower lecithin, esters of mono- and di-glycerides of fatty acids, mono- and di-glycerides of fatty acids and/or a mixture thereof. Mono- and di-glycerides of fatty acids and/or a mixture thereof are the most preferred emulsifiers.

The gluten-free pasta of the present invention is nutritionally balanced and shows a very low glycemic index of approx 27, i.e. less than about a half of the values reported for a gluten-containing pasta and less than about a third of rice-based pasta.

The pasta of the present invention therefore combines the advantages deriving from the absence of gluten, which makes it an excellent foodstuff for celiac population, with the ones due to a low glycemic index, which helps controlling the onset of diabetes in this people.

It has also been surprisingly found that the pasta of the present invention shows organoleptic and rheological features similar to those of durum wheat pasta, adversely from gluten-free pastas available on the market.

Also surprisingly, the pasta of the invention shows an excellent hold to cooking, altogether similar to that of durum wheat pasta, even if cooked for a time longer than the one suggested (i.e. about 15-16 min, depending on the shape of pasta as well), and it does neither release starch during cooking nor sticks when it cools down (adversely to what it typically happens with the currently available gluten-free pastas).

Further, the pasta of the present invention shows a complete protein profile and a poor fat content.

According to another aspect, the present invention relates to a process for preparing a pasta as above defined comprising sequentially the following steps:

i) sieving the following dry powder ingredients: a) 50% to 90% by weight of a naturally gluten-free raw maize or maize and potato starch, wherein maize starch ranges from 60% to 80% by weight and potato starch ranges from 10% to 30% by weight; b) 2 to 60% by weight of a gluten-free flour selected from at least one of the group consisting of pea, bean, broad bean, soy, carob, lentil, peanut, lupin and/or a mixture thereof and/or c) 0.5 to 30% by weight of a gluten-free protein source selected from at least one of the group consisting of pea, bean, broad bean, soy, carob, lentil, peanut, lupin, a concentrate or an isolate thereof and/or a mixture thereof; d) 0.1 to 5% by weight of a gluten-free emulsifier; the sum of a) to d) being 100%, so that the particles of the sieved ingredients show an average dimension of lower than 1200 μ;
ii) air blending the sieved ingredients;
iii) conveying the resulting blend to a gelatinization mixing tank, pre-heated and maintained at a temperature of 40-70°C;
iv) mixing the blend with water in a 1.7:1 - 2.3:1 weight ratio, under stirring;
v) gelatinizing the resulting mixture so that at least 7% by weight of the starch is gelatinized, the present step being carried out in 5-12 min, to obtain a dough;
vi) extruding the dough under vacuum at a pressure of 40-140 bars, thus obtaining the pasta.

Preferably, the powder ingredients, in step i), are sieved separately and the particles of the sieved ingredients show an average dimension of 300-1100 μ.

In particular, the temperature in step iii) is adjusted by air, steam or water, preferably by air (hot air); besides, in step iii), the tank is preferably pre-heated and maintained at a temperature of 55-65°C.

In step iv), the blend/water ratio is preferably 2:1 and 8-12% of the starch is gelatinized.

According to another preferred embodiment, the process of the invention provides that, in step v), the gelatinizing is carried out by water or steam, preferably steam, at 100-135°C.

Besides, before carrying out step vi), it is also preferred to subject the dough to an extrusion at a pressure of 5-15 bars and fragment it.

Also preferably, the pressure, in step vi), ranges from 50 to 130 bars.

Starch in its commercial form is insoluble in water and is composed of granules from which most of the moisture has been removed. When put in water, the granules may absorb a small amount of the liquid. Up to 60 to 70°C the swelling is reversible, the degree of reversibility being however dependent upon the kind of starch. With higher temperatures, an irreversible swelling, called 'gelatinization', begins, which is substantially due to water being absorbed away from the liquid phase into the starch granule.

Another aspect of the present invention relates to a dough comprising the following dry powder ingredients a) 50% to 90% by weight of a naturally gluten-free raw maize or maize and potato starch wherein maize starch ranges from 60% to 80% by weight and potato starch ranges from 10% to 30% by weight; b) 2 to 60% by weight of a gluten-free flour selected from at least one of the group consisting of pea, bean, broad bean, soy, carob, lentil, peanut, lupin and/or a mixture thereof and/or c) 0.5 to 30% by weight of a gluten-free protein source selected from at least one of the group consisting of pea, bean, broad bean, soy, carob, lentil, peanut, lupin, a concentrate or an isolate thereof and/or a mixture thereof; d) 0.1 to 5% by weight of a gluten-free emulsifier; the sum of a) to d) being 100%.

A further aspect of the present invention relates to the use of the above defined dough for the manufacture of a pasta as above defined.

Also, the invention relates to a process for preparing a dough as above defined comprising sequentially the following steps:

i) sieving the following dry powder ingredients: a) 50% to 90% by weight of a naturally gluten-free raw maize or maize and potato starch, wherein maize starch ranges from 60% to 80% by weight and potato starch ranges from 10% to 30% by weight; b) 2 to 60% by weight of a gluten-free flour selected from at least one of the group consisting of pea, bean, broad bean, soy, carob, lentil, peanut, lupin and/or a mixture thereof and/or c) 0.5 to 30% by weight of a gluten-free protein source selected from at least one of the group consisting of pea, bean, broad bean, soy, carob, lentil, peanut, lupin, a concentrate or an isolate thereof and/or a mixture thereof; d) 0.1 to 5% by weight of a gluten-free emulsifier; the sum of a) to d) being 100%, so that the particles of the sieved ingredients show an average dimension of lower than 1200 μ;
ii) air blending the sieved ingredients;
iii) conveying the resulting blend to a gelatinization mixing tank, pre-heated and maintained at a temperature of 40-70°C;
iv) mixing the blend with water in a 1.7:1 - 2.3:1 weight ratio, under stirring;
v) gelatinizing the resulting mixture so that at least 7% by weight of the starch is gelatinized, the present step being carried out in 5-12 min, to obtain a dough.

The above mentioned powder ingredients comprised in the pasta or in the dough of the invention are sieved, preferably separately, so that the particles of the sieved ingredients show an average dimension lower than 1200 μ, preferably of 300-1100 μ.

The sieved ingredients are then blended by air blowing, so that they are not damaged, with a positive effect on the modified starch reticulum formation, and dosed.

The resulting blend is then conveyed to a gelatinization mixing tank (such as, for instance, the Braibanti Progel), pre-heated and maintained at a temperature of 40-70°C, preferably adjusted by hot air, steam or water, most preferably by hot air.

The blend is subsequently mixed with water in a 1.7:1-2.3:1, preferably 2:1, weight ratio, under stirring, gelatinizing the resulting mixture so that at least 7% by weight, preferably 8-12% by weight, of the starch is gelatinized, this step being carried out in 5-12 min, to obtain a dough.

The gelatinization of the starch may be carried out, for instance by injecting hot water or steam, preferably steam, at 100-135°C, into the tank; an excellent dispersion of any ingredient has been observed.

The dough thus prepared is then extruded under vacuum at a pressure ranging from 40 to 140 bars, preferably 50 to 130 bars, thus obtaining the pasta.

Alternatively, the gelatinization of the starch may be also carried out under vacuum directly extruding the resulting dough.

As the man skilled in the field will easily understand, the pasta of the invention can be drawn though suitable dies, depending on the desired shape (this meaning both the type, i.e., for instance, spaghetti, etc., and whether fresh or dry pasta is being produced). Besides and accordingly, the pasta of the invention can be subjected to further steps (f.i. drying, etc.) as the skilled man would easily understand.

According to a preferred embodiment, the dough is subjected to a first extrusion at a lower pressure of 5-15 bars and fragmented, before being extruded at 40-140 bars.

The temperature of the dough is maintained at about 55-65°C and the resulting fragmented dough is then subjected to the extrusion at 40-140 bars, under vacuum.

The extruded pasta is then drawn through suitable dies, depending on the desired shape, and processed according to the techniques well known to the man skilled in the art, depending, for instance, on the desired typology of storing (such as dry or fresh pasta, etc.) and packaging of the pasta.

The whole process is continuous, except for the storage in silos before the packing phase, and is faster than a standard pasta production process as well and, therefore, much more efficient.

Besides, the steadily high temperatures allow to prevent the development of any microbial flora.

The starch reticulum formed during the extrusion process results to be more resistant than the one shown by other gluten-free pastas because it has been observed that it is less easily attacked by the body amylase, this likely explaining the lower glycemic index shown by the pasta of the invention.

The following examples illustrate the invention without limiting it.

Example 1

Gluten-free Pasta (Spaghetti)

|  | % (by weight) |
|---|---|
| Maize starch | 80.00 |
| Potato starch | 9.60 |
| Lupin flour | 10.00 |
| Mono- and di-glycerides of fatty acids (produced by Rialdi) | 0.40 |

The maize starch, potato starch, lupin flour and the mono- and di-glycerides of fatty acids were separately stocked in silos.

Each raw ingredient was automatically weighed on the respective scale located under the silo and then transferred to a mixing silo through an air flow system. Before being weighed, each raw ingredient was sieved (with a sieve of 19.5 mesh) to remove any impurity.

After the air mixing, the powder blend was conveyed to a Braibanti Progel gelatinization tank, pre-heated and maintained at a temperature of about 55°C by hot air flowing through a heating jacket, and then added with water in a 2:1 ratio, under stirring.

Saturated steam was then injected through a system of nozzles, at 115°C, into the tank, adjusting the temperature at about 60°C, this leading to the gelatinization of the 10% of the starch.

The resulting dough was subjected to a first extrusion at a pressure of approx 10 bars and was cut into small pellets, always maintaining the product temperature at about 60°C.

The fragmented dough thus obtained was transferred to an extrusion tank maintained under vacuum. There, a second extrusion process took place, through a Braibanti Cobra 1000 double screw extruder, at a pressure of about 120-130 bars.

Also this extrusion took place at a temperature of about 60°C to avoid that the condensate could alter the extrusion process and the modified starch reticulum.

The product was drawn though iron dies in the shape of spaghetti which were automatically cut and finally passed to the drying phase in a Fava F 600 continuous drier at a temperature of 70°C and a relative humidity of 75% for 5 hours and a half.

The product was eventually stored in closed silos before packaging.

Example n. 2

Gluten-free Pasta (spaghetti)

| | % (by weight) |
|---|---|
| Maize starch | 77.71 |
| Potato starch | 11.89 |
| Lupidor PO52-H500 (a lupin protein concentrate manufactured by NAPROFOOD GMBH & CO.; titre > 54%) | 10.00 |
| Mono- and di-glycerides of fatty acids (produced by Rialdi) | 0.40 |

The above ingredients were processed following the protocol illustrated above in the example n. 1 in order to obtain a dry pasta under the shape of spaghetti.

Example 3

Gluten-free Pasta (spaghetti)

| | % (by weight) |
|---|---|
| Maize starch | 76.60 |
| Potato starch | 13.00 |
| Lupin flour | 7.00 |
| Lupidor PO52-H500 | 3.00 |
| Mono- and di-glycerides of fatty acids (produced by Rialdi) | 0.40 |

The above ingredients were processed following the protocol illustrated above in the example n. 1 in order to obtain a dry pasta under the shape of spaghetti.

The protein content of the gluten-free pasta obtained according to the Example 3, determined following the Kjeldhal method based on organic nitrogen mineralisation into ammonium sulphate and ammonium titration, resulted to be of 5.5 g whereas the lipidic content, determined subjecting the pasta to acid hydrolysis and subsequently extracting with ethylic ether, was of 1.8 g.

Comparison of the glycemic index (GI) among durum wheat and gluten-free pastas:

|  | 1-invention | 2 | 3 | 4 | 5 |
|---|---|---|---|---|---|
| GI | 27 | 57 | 92 | 78 | 76 |

GI values were calculated making reference to glucose (GI: 100).

1- the gluten-free pasta of Example 3;
2- a durum wheat pasta (Spaghetti Barilla®, IT);
3- a rice pasta (Rice Grower's Co-op, AU);
4- a gluten-free pasta based on maize starch (Maize pasta, Gluten free, Orgran Natural Foods, Carrum Downs, AU);
5- a gluten-free pasta based on rice and maize (Rice and maize pasta, gluten free, Ris'O'Mais, Orgran Foods, AU).

All the data have been taken from the 'International table of glycemic index (GI) and glycemic load (GL) values: 2002', Kaye Foster-Powell et al., American Journal of Clinical Nutrition, Vol. 76, No. 1, 5-56, July 2002, excepted the data concerning the pasta '2' (available at the following web page: http://www.cibo360.it/alimentazione/dietologia/indici_tabelle/ig_alfa.htm) and the pasta of the invention.

The glycemic index is defined as the incremental area under the blood glucose response curve of a 50g carbohydrate portion of a test food expressed as a percent of the response to the same amount of carbohydrate from a standard food taken by the same subject.

The GI for the pasta of the Example 3 was calculated by applying the following formula:

$$GI_{P3} = IAUC_{P3}/IAUC_G \cdot 100$$

wherein
P3 is the pasta of the Example 3;
G is glucose, taken as the 'standard food'
IAUC is the Incremental Area Under the blood glucose response Curve calculated by the Incremental Glycemic Response Curves (IGRC), excluding any possible negative portion of the latter.

The values of the IGRCs derive from the difference between the blood glucose value read at the time t and the corresponding value of the basal blood glucose read at the zero time. The resulting GI values were averaged among the tested subjects.

In view of the above illustrated data, it can be therefore noted that the pasta of the invention fully meets the requirements of a "gluten-free" product, as it is made only with naturally gluten-free ingredients; further, it shows a very low glycemic index and, accordingly, it can be reasonably noted that favourable effects as regards the prevention of the onset of type II diabetes could be observed by inserting it in a dietary regime.

**Claims**

1. Pasta comprising the following dry powder ingredients:

a) 50 % to 90% by weight of naturally gluten-free raw maize or maize and potato starch, wherein maize starch ranges from 60% to 80% by weight and potato starch ranges from 10% to 30% by weight;
b) 2 to 60% by weight of a gluten-free flour selected from at least one of the group consisting of pea, bean, broad bean, soy, carob, lentil, peanut, lupin and/or a mixture thereof
and/or
c) 0.5 to 30% by weight of a gluten-free protein source selected from at least one of the group consisting of pea, bean, broad bean, soy, carob, lentil, peanut, lupin, a concentrate or an isolate threof and/or a mixture thereof;
d) 0.1 to 5% by weight of a gluten-free emulsifier;

the sum of a) to d) being 100%.

2. Pasta according to claim 1, wherein the flour ranges from 5% to 30% by weight.

3. Pasta according to claim 1 or 2, wherein the flour ranges from 5% to 15% by weight.

4. Pasta according to any of the previous claims, wherein the flour derives from lupin.

5. Pasta according to the previous claim, wherein the lupin flour ranges from 5% to 10% by weight.

6. Pasta according to any of the previous claims, wherein the protein source ranges 2% to 8% by weight.

7. Pasta according to any of the previous claims, wherein the protein source is lupin, a concentrate or an isolate thereof and/or a mixture thereof.

8. Pasta according to any of the previous claims, wherein the emulsifier ranges from 0.3 to 2% by weight.

9. Pasta according to any of the previous claims, wherein the emulsifier is selected from at least one of the group consisting of soy lecithin, sunflower lecithin, esters of mono- and di-glycerides of fatty acids, mono- and di-glycerides of fatty acids and/or a mixture thereof.

10. Pasta according to any of the previous claims, wherein the emulsifier is selected from mono- and di-glycerides of fatty acids and/or a mixture thereof.

11. Process for preparing a pasta according to any of claims 1-10 comprising sequentially the following steps:

> i) sieving the following dry powder ingredients: a) 50% to 90% by weight of a naturally gluten-free raw maize or maize and potato starch, wherein maize starch ranges from 60% to 80% by weight and potato starch ranges from 10% to 30% by weight; b) 2 to 60% by weight of a gluten-free flour selected from at least one of the group consisting of pea, bean, broad bean, soy, carob, lentil, peanut, lupin and/or a mixture thereof and/or c) 0.5 to 30% by weight of a gluten-free protein source selected from at least one of the group consisting of pea, bean, broad bean, soy, carob, lentil, peanut, lupin, a concentrate or an isolate threof and/or a mixture thereof; d) 0.1 to 5% by weight of a gluten-free emulsifier; the sum of a) to d) being 100%, so that the particles of the sieved ingredients show an average dimension of lower than 1200 $\mu$;
> ii) air blending the sieved ingredients;
> iii) conveying the resulting blend to a gelatinization mixing tank, pre-heated and maintained at a temperature of 40-70°C;
> iv) mixing the blend with water in a 1.7:1 - 2.3:1 weight ratio, under stirring;
> v) gelatinizing the resulting mixture so that at least 7% by weight of the starch is gelatinized, the present step being carried out in 5-12 min, to obtain a dough;
> vi) extruding the dough under vacuum at a pressure of 40-140 bars, thus obtaining the pasta.

12. Process according to the previous claim, wherein, in step i), the powder ingredients are sieved separately and the particles of the sieved ingredients show an average dimension of 300-1100 $\mu$.

13. Process according to claim 11 or 12, wherein the temperature in step iii) is adjusted by air, steam or water.

14. Process according to any of claims11-13, wherein the temperature in step iii) is adjusted by air.

15. Process according to any of claims 11-14, wherein, in step iii) the tank is pre-heated and maintained at a temperature of 55-65°C.

16. Process according to any of claims 11-15, wherein, in step iv), the blend/water ratio is 2:1 and 8-12% by weight of the starch is gelatinized.

17. Process according to any of claims11-16, wherein, in step v), gelatinizing is carried out by water or steam, preferably steam, at 100-135°C.

18. Process according to any of claims 11-17, wherein before carrying out step vi), the dough is subjected to an extrusion at a pressure of 5-15 bars and fragmented.

19. Process according to any of claims11-18, wherein, in step vi), the pressure ranges from 50 to 130 bars.

**20.** Dough comprising the following dry powder ingredients:

a) 50% to 90% by weight of a naturally gluten-free raw maize or maize and potato starch, wherein maize starch ranges from 60% to 80% by weight and potato starch ranges from 10% to 30% by weight;
b) 2 to 60% by weight of a gluten-free flour selected from at least one of the group consisting of pea, bean, broad bean, soy, carob, lentil, peanut, lupin and/or a mixture thereof and/or
c) 0.5 to 30% by weight of a gluten-free protein source selected from at least one of the group consisting of pea, bean, broad bean, soy, carob, lentil, peanut, lupin, a concentrate or an isolate threof and/or a mixture thereof;
d) 0.1 to 5% by weight of a gluten-free emulsifier;

the sum of a) to d) being 100%.

**21.** Process for preparing a dough according to the previous claim, comprising sequentially the following steps:

i) sieving the following dry powder ingredients: a) 50% to 90% by weight of a naturally gluten-free raw maize or maize and potato starch, wherein maize starch ranges from 60% to 80% by weight and potato starch ranges from 10% to 30% by weight; b) 2 to 60% by weight of a gluten-free flour selected from at least one of the group consisting of pea, bean, broad bean, soy, carob, lentil, peanut, lupin and/or a mixture thereof and/or c) 0.5 to 30% by weight of a gluten-free, protein source selected from at least one of the group consisting of pea, bean, broad bean, soy, carob, lentil, peanut, lupin, a concentrate or an isolate threof and/or a mixture thereof; d) 0.1 to 5% by weight of a gluten-free emulsifier; the sum of a) to d) being 100%, so that the particles of the sieved ingredients show an average dimension of lower than 1200 $\mu$;
ii) air blending the sieved ingredients;
iii) conveying the resulting blend to a gelatinization mixing tank, pre-heated and maintained at a temperature of 40-70°C;
iv) mixing the blend with water in a 1.7:1 - 2.3:1 weight ratio, under stirring;
v) gelatinizing the resulting mixture so that at least 7% by weight of the starch is gelatinized, the present step being carried out in 5-12 min, to obtain a dough.

**22.** Use of a dough according to claim 20, for the manufacture of a pasta according to any of claims 1-10.

**Patentansprüche**

**1.** Pasta, umfassend die folgenden Trockenpulver-Ingredienzien:

a) 50 bis 90 Gew.-% natürlicherweise glutenfreier Rohmais- oder Mais- und Kartoffelstärke, wobei Maisstärke im Bereich von 60 bis 80 Gew.-% liegt und Kartoffelstärke im Bereich von 10 bis 30 Gew.-% liegt;
b) 2 bis 60 Gew.-% eines glutenfreien Mehls, ausgewählt aus wenigstens einem der Gruppe, bestehend aus Erbse, Bohne, Puffbohne, Sojabohne, Johannisbrot, Linse, Erdnuss, Lupine und/oder einem Gemisch davon und/oder
c) 0,5 bis 30 Gew.-% einer glutenfreien Proteinquelle, ausgewählt aus wenigstens einem der Gruppe, bestehend aus Erbse, Bohne, Puffbohne, Sojabohne, Johannisbrot, Linse, Erdnuss, Lupine, einem Konzentrat oder einem Isolat davon und/oder einem Gemisch davon;
d) 0,1 bis 5 Gew.-% eines glutenfreien Emulgators;

wobei die Summe von a) bis d) 100% ist.

**2.** Pasta gemäß Anspruch 1, wobei das Mehl im Bereich von 5 bis 30 Gew.-% liegt.

**3.** Pasta gemäß Anspruch 1 oder 2, wobei das Mehl im Bereich von 5 bis 15 Gew.-% liegt.

**4.** Pasta gemäß einem der vorangehenden Ansprüche, wobei das Mehl aus Lupinen stammt.

**5.** Pasta gemäß dem vorangehenden Anspruch, wobei das Lupinenmehl im Bereich von 5 bis 10 Gew.-% liegt.

**6.** Pasta gemäß einem der vorangehenden Ansprüche, wobei die Proteinquelle im Bereich von 2 bis 8 Gew.-% liegt.

7. Pasta gemäß einem der vorangehenden Ansprüche, wobei die Proteinquelle Lupine, ein Konzentrat oder ein Isolat davon und/oder ein Gemisch davon ist.

8. Pasta gemäß einem der vorangehenden Ansprüche, wobei der Emulgator im Bereich von 0,3 bis 2 Gew.-% liegt.

9. Pasta gemäß einem der vorangehenden Ansprüche, wobei der Emulgator ausgewählt ist aus wenigstens einem der Gruppe, bestehend aus Sojalecithin, Sonnenblumenlecithin, Estern von Mono- und Diglyceriden von Fettsäuren, Mono- und Diglyceriden von Fettsäuren und/oder einem Gemisch davon.

10. Pasta gemäß einem der vorangehenden Ansprüche, wobei der Emulgator aus Mono- und Diglyceriden von Fettsäuren und/oder einem Gemisch davon ausgewählt ist.

11. Verfahren zur Herstellung einer Pasta gemäß einem der Ansprüche 1 bis 10, das nacheinander die folgenden Schritte umfasst:

    i) Sieben der folgenden Trockenpulver-Ingredienzien: a) 50 bis 90 Gew.-% einer natürlicherweise glutenfreien Rohmais- oder Mais- und Kartoffelstärke, wobei Maisstärke im Bereich von 60 bis 80 Gew.-% liegt und Kartoffelstärke im Bereich von 10 bis 30 Gew.-% liegt; b) 2 bis 60 Gew.-% eines glutenfreien Mehls, ausgewählt aus wenigstens einem der Gruppe, bestehend aus Erbse, Bohne, Puffbohne, Sojabohne, Johannisbrot, Linse, Erdnuss, Lupine und/oder einem Gemisch davon und/oder c) 0,5 bis 30 Gew.-% einer glutenfreien Proteinquelle, ausgewählt aus wenigstens einem der Gruppe, bestehend aus Erbse, Bohne, Puffbohne, Sojabohne, Johannisbrot, Linse, Erdnuss, Lupine, einem Konzentrat oder einem Isolat davon und/oder einem Gemisch davon; d) 0,1 bis 5 Gew.-% eines glutenfreien Emulgators; wobei die Summe von a) bis d) 100% ist, derart, dass die Partikel der gesiebten Ingredienzien eine durchschnittliche Abmessung von geringer als 1200 $\mu$m zeigen;
    ii) Mischen der gesiebten Ingredienzien mit Luft;
    iii) Befördern der resultierenden Mischung zu einem Gelatinierungsmischtank, der auf eine(r) Temperatur von 40-70°C vorerwärmt und gehalten wird;
    iv) Mischen der Mischung unter Rühren mit Wasser in einem Gewichtsverhältnis von 1,7:1 - 2,3:1;
    v) Gelatinieren des resultierenden Gemisches derart, dass wenigstens 7% der Stärke gelatiniert werden, wobei der vorliegende Schritt in 5 bis 12 Minuten durchgeführt wird, um einen Teig zu erhalten;
    vi) Extrudieren des Teigs unter Vakuum bei einem Druck von 40-140 Bar, wodurch die Pasta erhalten wird.

12. Verfahren gemäß dem vorangehenden Anspruch, wobei in Schritt i) die Pulveringredienzien getrennt gesiebt werden und die Partikel der gesiebten Ingredienzien eine durchschnittliche Abmessung von 300-1100 $\mu$m zeigen.

13. Verfahren gemäß Anspruch 11 oder 12, wobei die Temperatur in Schritt iii) durch Luft, Dampf oder Wasser eingestellt wird.

14. Verfahren gemäß einem der Ansprüche 11 bis 13, wobei die Temperatur in Schritt iii) durch Luft eingestellt wird.

15. Verfahren gemäß einem der Ansprüche 11 bis 14, wobei in Schritt iii) der Tank auf eine(r) Temperatur von 55-65°C vorerwärmt und gehalten wird.

16. Verfahren gemäß einem der Ansprüche 11 bis 15, wobei in Schritt iv) das Verhältnis Mischung/Wasser 2:1 ist, und 8-12 Gew.-% der Stärke gelatiniert werden.

17. Verfahren gemäß einem der Ansprüche 11 bis 16, wobei in Schritt v) eine Gelatinierung durch Wasser oder Dampf, vorzugsweise Dampf, bei 100 bis 135°C durchgeführt wird.

18. Verfahren gemäß einem der Ansprüche 11 bis 17, wobei vor Durchführung von Schritt vi) der Teig einem Extrudieren bei einem Druck von 5-15 Bar unterworfen und aufgeteilt wird.

19. Verfahren gemäß einem der Ansprüche 11 bis 18, wobei in Schritt vi) der Druck von 50-130 Bar reicht.

20. Teig, umfassend die folgenden Trockenpulver-Ingredienzien:

    a) 50 bis 90 Gew.-% einer natürlicherweise glutenfreien Rohmais- oder Mais- und Kartoffelstärke, wobei Maisstärke im Bereich von 60 bis 80 Gew.-% liegt und Kartoffelstärke im Bereich von 10 bis 30 Gew.-% liegt;

b) 2 bis 60 Gew.-% eines glutenfreien Mehls, ausgewählt aus wenigstens einem der Gruppe, bestehend aus Erbse, Bohne, Puffbohne, Sojabohne, Johannisbrot, Linse, Erdnuss, Lupine und/oder einem Gemisch davon und/oder

c) 0,5 bis 30 Gew.-% einer glutenfreien Proteinquelle, ausgewählt aus wenigstens einem der Gruppe, bestehend aus Erbse, Bohne, Puffbohne, Sojabohne, Johannisbrot, Linse, Erdnuss, Lupine, einem Konzentrat oder einem Isolat davon und/oder einem Gemisch davon;

d) 0,1 bis 5 Gew.-% eines glutenfreien Emulgators;

wobei die Summe von a) bis d) 100% ist.

21. Verfahren zur Herstellung eines Teigs gemäß dem vorangehenden Anspruch, umfassend aufeinanderfolgend die folgenden Schritte:

i) Sieben der folgenden Trockenpulver-Ingredienzien: a) 50 bis 90 Gew.-% einer natürlicherweise glutenfreien Rohmais- oder Mais- und Kartoffelstärke, wobei Maisstärke im Bereich von 60 bis 80 Gew.-% liegt und Kartoffelstärke im Bereich von 10 bis 30 Gew.-% liegt; b) 2 bis 60 Gew.-% eines glutenfreien Mehls, ausgewählt aus wenigstens einem der Gruppe, bestehend aus Erbse, Bohne, Puffbohne, Sojabohne, Johannisbrot, Linse, Erdnuss, Lupine und/oder einem Gemisch davon und/oder c) 0,5 bis 30 Gew.-% einer glutenfreien Proteinquelle, ausgewählt aus wenigstens einem der Gruppe, bestehend aus Erbse, Bohne, Puffbohne, Sojabohne, Johannisbrot, Linse, Erdnuss, Lupine, einem Konzentrat oder einem Isolat davon und/oder einem Gemisch davon; d) 0,1 bis 5 Gew.-% eines glutenfreien Emulgators; wobei die Summe von a) bis d) 100% ist, derart, dass die Partikel der gesiebten Ingredienzien eine durchschnittliche Abmessung von geringer als 1200 $\mu$m zeigen;

ii) Mischen der gesiebten Ingredienzien mit Luft;

iii) Befördern der resultierenden Mischung zu einem Gelatinierungsmischtank, der auf eine(r) Temperatur von 40-70°C vorerwärmt und gehalten wird;

iv) Mischen der Mischung unter Rühren mit Wasser in einem Gewichtsverhältnis von 1,7:1 - 2,3:1;

v) Gelatinieren des resultierenden Gemisches derart, dass wenigstens 7% der Stärke gelatiniert werden, wobei der vorliegende Schritt in 5 bis 12 Minuten durchgeführt wird, um einen Teig zu erhalten.

22. Verwendung eines Teigs gemäß Anspruch 20 für die Herstellung einer Pasta gemäß einem der Ansprüche 1 bis 10.


**Revendications**

1. Pâtes alimentaires, comprenant les ingrédients en poudre sèche suivants :

a) 50% à 90% en poids de fécule de maïs brute ou de fécule de maïs et de pomme de terre naturellement sans gluten, dans lesquelles la proportion de fécule de maïs varie de 60 % à 80% en poids et la proportion de fécule de pomme de terre varie de 10% à 30 % en poids ;

b) 2 à 60% en poids d'une farine sans gluten, choisie parmi au moins l'un des éléments du groupe constitué des pois, des haricots, des fèves, du soja, des caroubes, des lentilles, des arachides, du lupin et / ou un mélange de ceux-ci

et / ou

c) 0,5 à 30% en poids d'une source de protéines sans gluten, choisie parmi au moins l'un des éléments du groupe constitué des pois, des haricots, des fèves, du soja, des caroubes, des lentilles, des arachides, du lupin, un concentré ou un isolat de ceux-ci et / ou un mélange de ceux-ci ;

d) 0,1 à 5% en poids d'un émulsifiant sans gluten ;

la somme de a) à d) étant égale à 100%.

2. Pâtes alimentaires selon la revendication 1, dans lesquelles la proportion de farine varie de 5% à 30 % en poids.

3. Pâtes alimentaires selon la revendication 1 ou 2, dans lesquelles la proportion de farine varie de 5% à 15 % en poids.

4. Pâtes alimentaires selon l'une quelconque des revendications précédentes, dans lesquelles la farine provient du lupin.

5. Pâtes alimentaires selon la revendication précédente, dans lesquelles la proportion de farine de lupin varie de 5% à 10% en poids.

6. Pâtes alimentaires selon l'une quelconque des revendications précédentes, dans lesquelles la proportion de la source de protéines varie de 2% à 8% en poids.

7. Pâtes alimentaires selon l'une quelconque des revendications précédentes, dans lesquelles la source de protéines est le lupin, un concentré ou un isolat de celui-ci et / ou un mélange de celui-ci.

8. Pâtes alimentaires selon l'une quelconque des revendications précédentes, dans lesquelles la proportion d'émulsifiant varie de 0,3 à 2% en poids.

9. Pâtes alimentaires selon l'une quelconque des revendications précédentes, dans lesquelles l'émulsifiant est choisi parmi au moins l'un des éléments du groupe constitué de la lécithine de soja, de la lécithine de tournesol, des esters de mono- et diglycérides d'acides gras, des mono- et diglycérides d'acides gras et / ou d'un mélange de ceux-ci.

10. Pâtes alimentaires selon l'une quelconque des revendications précédentes, dans lesquelles l'émulsifiant est choisi parmi les mono- et diglycérides d'acides gras et / ou un mélange de ceux-ci.

11. Procédé de préparation de pâtes alimentaires selon l'une quelconque des revendications 1 à 10, comprenant successivement les étapes suivantes consistant à :

i) tamiser les ingrédients en poudre sèche suivants : a) 50% à 90% en poids d'une fécule de maïs brute ou de fécule de maïs et de pomme de terre naturellement sans gluten, dans lesquelles la proportion de fécule de maïs varie de 60 % à 80% en poids et la proportion de fécule de pomme de terre varie de 10% à 30 % en poids ; b) 2 à 60% en poids d'une farine sans gluten, choisie parmi au moins l'un des éléments du groupe constitué des pois, des haricots, des fèves, du soja, des caroubes, des lentilles, des arachides, du lupin et / ou un mélange de ceux-ci et / ou c) 0,5 à 30% en poids d'une source de protéines sans gluten choisie parmi au moins l'un des éléments du groupe constitué des pois, des haricots, des fèves, du soja, des caroubes, des lentilles, des arachides, du lupin, un concentré ou un isolat de ceux-ci et / ou un mélange de ceux-ci ; d) 0,1 à 5% en poids d'un émulsifiant sans gluten ; la somme de a) à d) étant égale à 100%, de sorte que les particules des ingrédients tamisés présentent une dimension moyenne inférieure à 1200 $\mu$ ;
ii) mélanger par air les ingrédients tamisés ;
iii) transporter le mélange résultant jusqu'à un réservoir de mélange de gélatinisation, préchauffé et maintenu à une température de 40 à 70°C ;
iv) mélanger le mélange avec de l'eau dans un rapport en poids de 1,7 : 1 à 2,3 : 1, sous agitation ;
v) gélatiniser le mélange en résultant de telle sorte qu'au moins 7% en poids de la fécule est gélatinisé, la présente étape étant effectuée en 5 à 12 min, pour obtenir une pâte ;
vi) extruder la pâte sous vide à une pression de 40 à 140 bar, pour ainsi obtenir les pâtes alimentaires.

12. Procédé selon la revendication précédente, dans lequel, dans l'étape i), les ingrédients en poudre sont tamisés séparément et les particules des ingrédients tamisés montrent une dimension moyenne de 300 à 1100 $\mu$.

13. Procédé selon la revendication 11 ou 12, dans lequel la température dans l'étape iii) est ajustée par de l'air, de la vapeur ou de l'eau.

14. Procédé selon l'une quelconque des revendications 11 à 13, dans lequel la température dans l'étape iii) est ajustée par de l'air.

15. Procédé selon l'une quelconque des revendications 11 à 14, dans lequel, dans l'étape iii) le réservoir est préchauffé et maintenu à une température de 55 à 65°C.

16. Procédé selon l'une quelconque des revendications 11 à 15, dans lequel, dans l'étape iv), le rapport mélange/eau est de 2 : 1 et 8 à 12 % en poids de la fécule est gélatinisée.

17. Procédé selon l'une quelconque des revendications 11 à 16, dans lequel, dans l'étape v), la gélatinisation est effectuée par de l'eau ou de la vapeur, de préférence de la vapeur d'eau, à une température de 100 à 135°C.

18. Procédé selon l'une quelconque des revendications 11 à 17, dans lequel avant d'effectuer l'étape vi), la pâte est soumise à une extrusion sous une pression de 5 à 15 bars et fragmentée.

**19.** Procédé selon l'une quelconque des revendications 11 à 18, dans lequel, dans l'étape vi), la pression varie entre 50 et 130 bars.

**20.** Pâte comprenant les ingrédients en poudre sèche ci-après :

a) 50% à 90% en poids de fécule de maïs brute ou de fécule de maïs et de pomme de terre naturellement sans gluten, dans lesquelles la proportion de fécule de maïs varie de 60 % à 80% en poids et la proportion de fécule de pomme de terre varie de 10% à 30 % en poids ;
b) 2 à 60% en poids d'une farine sans gluten, choisie parmi au moins l'un des éléments du groupe constitué des pois, des haricots, des fèves, du soja, des caroubes, des lentilles, des arachides, du lupin et / ou un mélange de ceux-ci
et / ou
c) 0,5 à 30% en poids d'une source de protéines sans gluten, choisie parmi au moins l'un des éléments du groupe constitué des pois, des haricots, des fèves, du soja, des caroubes, des lentilles, des arachides, du lupin, un concentré ou un isolat de ceux-ci et / ou un mélange de ceux-ci ;
d) 0,1 à 5% en poids d'un émulsifiant sans gluten ;

la somme de a) à d) étant égale à 100%.

**21.** Procédé de préparation d'une pâte selon la revendication précédente, comprenant séquentiellement les étapes suivantes consistant à :

i) tamiser les ingrédients en poudre sèche suivants : a) 50% à 90% en poids d'une fécule de maïs brute ou de fécule de maïs et de pomme de terre naturellement sans gluten, dans lesquelles la proportion de fécule de maïs varie de 60 % à 80% en poids et la proportion de fécule de pomme de terre varie de 10% à 30 % en poids ; b) 2 à 60% en poids d'une farine sans gluten, choisie parmi au moins l'un des éléments du groupe constitué des pois, des haricots, des fèves, du soja, des caroubes, des lentilles, des arachides, du lupin et / ou un mélange de ceux-ci et / ou c) 0,5 à 30% en poids d'une source de protéines sans gluten choisie parmi au moins l'un des éléments du groupe constitué des pois, des haricots, des fèves, du soja, des caroubes, des lentilles, des arachides, du lupin, un concentré ou un isolat de ceux-ci et / ou un mélange de ceux-ci ; d) 0,1 à 5% en poids d'un émulsifiant sans gluten ; la somme de a) à d) étant égale à 100%, de sorte que les particules des ingrédients tamisés présentent une dimension moyenne inférieure à 1200 μ ;
ii) mélanger par air les ingrédients tamisés ;
iii) transporter le mélange résultant jusqu'à un réservoir de mélange de gélatinisation, préchauffé et maintenu à une température de 40 à 70°C ;
iv) mélanger le mélange avec de l'eau dans un rapport en poids de 1,7 : 1 à 2,3 : 1, sous agitation ;
v) gélatiniser le mélange en résultant de telle sorte qu'au moins 7% en poids de la fécule est gélatinisé, la présente étape étant effectuée en 5 à 12 min, pour obtenir une pâte.

**22.** Utilisation d'une pâte selon la revendication 20, pour la fabrication de pâtes alimentaires selon l'une quelconque des revendications 1 à 10.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2815518
- EP 0872188 A
- US 3836680 A
- US 5989620 A
- US 4517215 A
- EP 0997078 A
- EP 0449697 A

**Non-patent literature cited in the description**

- **KAYE FOSTER-POWELL et al.** International table of glycemic index (GI) and glycemic load (GL) values: 2002. *American Journal of Clinical Nutrition,* July 2002, vol. 76 (1), 5-56